# EUROPÄISCHE PATENTSCHRIFT

(11) **EP 0 702 215 B1**
(45) Veröffentlichungstag und Bekanntmachung des Hinweises auf die Patenterteilung: **10.05.2000**
(21) Anmeldenummer: 95111800.9
(22) Anmeldetag: 27.07.1995
(51) Int. Cl.: G01F 23/32, G01F 23/38

(54) **Einrichtung zur Leerstandsüberwachung eines Vorratsbehälters**
Low level monitoring apparatus in a reservoir
Dispositif de contrôle de niveau insuffisant d'un réservoir

(30) Priorität: 16.09.1994 DE 4433170
(43) Veröffentlichungstag der Anmeldung: 20.03.1996
(73) Patentinhaber: Lincoln GmbH, D-69190 Walldorf (DE)
(72) Erfinder: Paluncic, Zdravko, Dr.-Ing., DE-67346 Speyer (DE); Hack, Jürgen, c/oKeil & Schaafhausen Patentanwälte, D-60322 Frankfurt am Main (DE)
(74) Vertreter: KEIL & SCHAAFHAUSEN

(56) Entgegenhaltungen:
- DE-A- 3 917 497
- US-A- 3 605 086
- US-A- 4 171 186

## Beschreibung

Die Erfindung bezieht sich auf eine Einrichtung zur Leerstandüberwachung eines Vorratsbehälters mit einer z.B. auf dem Kolbenprinzip arbeitenden Vorratsförderpumpe, insbesondere Schmierstoffpumpe.

Aufgabe der vorliegenden Erfindung ist es, eine einfach aufgebaute und sicher ansprechende Einrichtung vorzuschlagen, mit welcher angezeigt wird, wenn der Vorratsbehälter "leergepumpt", d.h. unter ein bestimmtes Niveau gesunken ist.

Diese Aufgabe wird erfindungsgemäß gelöst durch einen von der Vorratsförderpumpe drehend antreibbaren Rührflügel mit einem daran schwenkbar angelenkten Halter für einen Lagegeber, welcher aufgrund des Fließwiderstandes des Vorrats, insbesondere des Schmierstoffs, bei der Drehbewegung des Rührflügels in eine erste Endlage gedrückt wird, in welcher der Lagegeber auf einer ersten Umlaufbahn umläuft, und mit einer Auslenkeinrichtung, welche den Halter mit dem Lagegeber bei der Drehbewegung aus der ersten Endlage in eine zweite Endlage überführt, bei welcher der Lagegeber in einer zweiten, von der ersten Umlaufbahn abweichenden Umlaufbahn umläuft, und mit einem der ersten und/oder der zweiten Umlaufbahn zugeordneten Lagesensor für den Lagegeber.

Das Überwachungsprinzip besteht also darin, daß mittels eines Lagesensors die Lage eines Lagegebers abgetastet wird, wobei die Lage des Lagegebers davon abhängt, ob noch Vorrat in dem Vorratsbehälter vorhanden ist oder nicht.

Der Lagegeber kann dabei ein Magnet und der Lagesensor ein Magnetschalter sein. Es ist aber auch möglich, die Lageermittlung des Lagegebers optisch, kapazitiv oder induktiv oder dgl. durchzuführen.

Die Überwachungseinrichtung ist dann besonders einfach aufgebaut und funktionssicher, wenn die Drehachse des Drehflügels parallel, vorzugsweise koaxial zur Mittelachse des Vorratsbehälters liegt.

Dem gleichen Zweck dient es, wenn die Lagerachse des Halters an dem Rührflügel parallel zu der Drehachse des Rührflügels liegt.

Die Auslenkeinrichtung kann einen Steuernocken für den Lagegeber aufweisen, wodurch die Auslenkeinrichtung bei einfachem Aufbau zuverlässig funktioniert.

Die Überführung des Lagegebers von der ersten Umlaufbahn in die zweite Umlaufbahn bspw. mittels des Steuernockens geht dann besonders störungsfrei vonstatten, wenn der Lagegeber drehbeweglich an dem Halter gelagert ist. Dies gilt insbesondere dann, wenn der Lagegeber ein zylindrischer Magnet ist, welcher um seine Achse an dem Halter drehbar ist.

Dabei liegt die Drehachse des Lagegebers vorzugsweise parallel zur Drehachse des Rührflügels.

Der Halter mit dem Lagegeber wird dann bei der Drehbewegung des Rührflügels zuverlässig bei noch vorhandenem Vorrat in die erste Endlage gedrückt, wenn der Halter mit einer in der ersten Endlage des Halters etwa radial zur Drehachse des Rührflügels stehenden Widerstandsplatte ausgestattet ist, welche somit aufgrund ihrer Gestalt und Orientierung einen verhältnismäßig großen Fließwiderstand bewirkt, welcher seinerseits für das Verschwenken des Halters mit dem Lagegeber in die erste Endlage verantwortlich ist.

Damit die beiden Endlagen des Halters genau definiert sind, können sie durch Anschläge für den Halter an dem Rührflügel bestimmt sein.

Um ein leicht erkennbares Signal bei Erreichen des Leerstandes in dem Vorratsbehälter zu erhalten, kann der Lagesensor, insbesondere Magnetschalter, in dem Stromkreis einer Signaleinrichtung, z.B. einer Signallampe liegen. Auch eine akustische Anzeige kann zweckmäßig sein.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung auch unabhängig von ihrer Zusammenfassung in Ansprüchen oder deren Rückbeziehung.

Es zeigen:

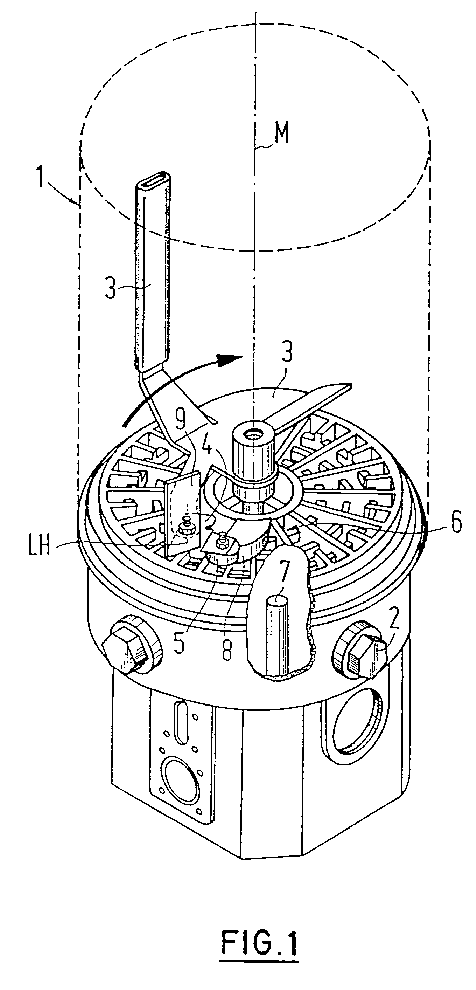

- Fig. 1: schematisch in Schrägansicht eine die Erfindung aufweisende Überwachungseinrichtung, und
- Fig. 2: schematisch in Draufsicht die Überwachungseinrichtung nach Fig. 1.

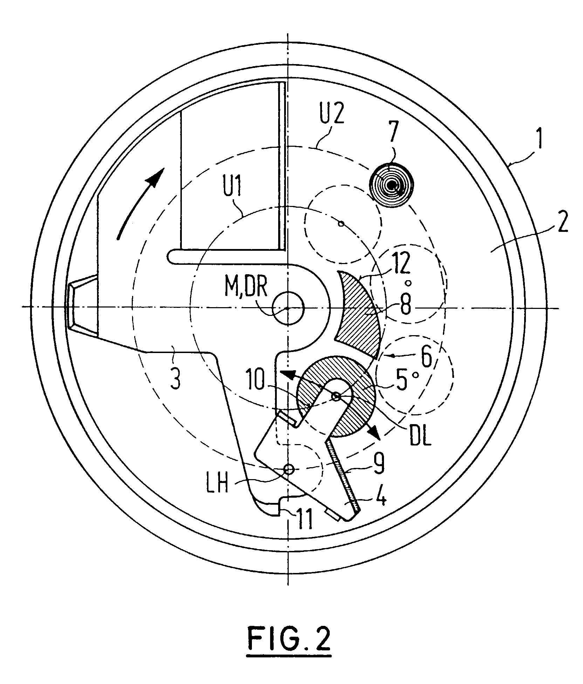

Die dargestellte Überwachungseinrichtung ist bei einem Vorratsbehälter 1 vorgesehen, welche mit einer auf dem Kolbenprinzig arbeitenden Vorratsförderpumpe 2, welche bspw. eine Schmierstoffpumpe sein kann, vorgesehen. Die Überwachungseinrichtung weist einen Rührflügel 3 auf, welcher von dem nicht dargestellten Antriebsmotor der Vorratsförderpumpe 2 drehend antreibbar ist. An dem um die Drehachse DR, welche mit der Mittelachse M des Vorratsbehälters 1 zusammenfällt, drehbaren Rührflügel 3 ist ein um die Lagerachse LH schwenkbarer Halter 4 für einen Lagegeber 5 angelenkt. Der Lagegeber 5 ist ein zylindrischer Magnet, welcher um seine Drehachse DL drehbar an dem Halter 4 gelagert ist. Die Lagerachse LH und die Drehachse DL stehen parallel zur Drehachse DR des Rührflügels 3. Der Halter 4 hat ferner an seinem radial außerhalb der Lagerachse LH des Halters 4 liegenden Flügel eine senkrecht, d.h. parallel zur Lagerachse LH des Halters 4 stehende Widerstandsplatte 9, welche in der in Fig. 2 dargestellten ersten Endlage des Halters 4, in welcher der Halter 4 an einem an dem Rührflügel 3 ausgebildeten Anschlag 10 anliegt, etwa radial verläuft, und somit beim Drehen des Rührflügels 3 in der mit Pfeil angedeuteten Uhrzeigerrichtung einen möglichst großen Fließwiderstand in dem Vorrat des Vorratsbehälters 1 bildet, so daß der Halter 4 sicher an dem Anschlag 10 gehalten wird. In dieser ersten Endlage beschreibt der Lagegeber 5 eine Umlaufbahn U1. In der Umlaufbahn U1 befindet sich eine Auslenkeinrichtung 6 in Form eines Steuernockens 8. Der Steuernocken 8 ist so angeordnet und ausgestaltet, daß der Lagegeber 5 bei jedem Umlauf, wie dies mit gestrichelten Linien dargestellt ist, unter Verschwenken des Halters 4 in eine zweite Endlage, in welcher der Halter 4 an einem äußeren Anschlag 11 des Rührflügels 3 anliegt, in eine zweite äußere Umlaufbahn U2 überführt. Zu diesem Zweck hat der Steuernocken 8 eine Auflaufrundung 12, an welcher der zylindrische magnetische Lagegeber 5 abrollen kann. In einem Umfangsabstand vor dem Steuernocken 8 befindet sich in der zweiten Umlaufbahn U2 ein z.B. als Magnetschalter ausgebildeter Lagesensor 7. Befindet sich noch Vorrat in dem Vorratsbehälter 1 wird, nachdem der Lagegeber 5 den Steuernokken 8 passiert hat, der Halter 4 aufgrund des Fließwiderstandes wieder in seine erste, in Fig. 2 dargestellte Endlage überführt, so daß der Lagegeber 5 wiederum in der inneren ersten Umlaufbahn U1 umläuft. Ist der Vorratsbehälter 1 jedoch bereits soweit geleert, daß der Halter 4 mit seiner Widerstandsplatte 9 nicht mehr in dem Vorrat umläuft, verbleibt beim Drehen des Rührflügels 3 der Lagegeber 5 nach Passieren des Steuernockns 8 in der äußeren zweiten Umlaufbahn U2, so daß er zwangsläufig den Lagesensor 7 passiert. Der Lagesensor 7 zeigt dann an, daß in dem Vorratsbehälter 1 Leerstand eingetreten ist. Dies kann bspw. dadurch geschehen, daß der Lagesensor 7 in dem Stromkreis eines Signalgebers, z.B. einer Signallampe, liegt. Das Signal kann auch einer elektronischen, programmierbaren Steuerung, wie einer SPS, zugeführt werden.

### Bezugszeichenliste:

- 1: Vorratsbehälter
- 2: Vorratsförderpumpe
- 3: Rührflügel
- 4: Halter
- 5: Lagegeber, Magnet
- 6: Auslenkeinrichtung
- 7: Lagesensor, Magnetschalter
- 8: Steuernocken
- 9: Widerstandsplatte
- 10: Anschlag
- 11: Anschlag
- 12: Auflaufrundung

- DL: Drehachse des Lagegebers 5
- DR: Drehachse des Rührflügels 3
- LH: Lagerachse des Halters 4
- M: Mittelachse des Vorratsbehälters 1
- U1: erste Umlaufbahn
- U2: zweite Umlaufbahn

## Patentansprüche

1. Einrichtung zur Leerstandüberwachung eines Vorratsbehälters (1) mit einer z.B. auf dem Kolbenprinzip arbeitenden Vorratsförderpumpe (2), insbesondere Schmierstoffpumpe, **gekennzeichnet durch** einen von der Vorratsförderpumpe (2) drehend antreibbaren Rührflügel (3) mit einem daran schwenkbar angelenkten Halter (4) für einen Lagegeber (5), welcher aufgrund des Fließwiderstandes des Vorrats, insbesondere des Schmierstoffs, bei der Drehbewegung des Rührflügels (3) in eine erste Endlage gedrückt wird, in welcher der Lagegeber (5) auf einer ersten Umlaufbahn (U1) umläuft und mit einer Auslenkeinrichtung (6), welche den Halter (4) mit dem Lagegeber (5) bei der Drehbewegung aus der ersten Endlage in eine zweite Endlage überführt, bei welcher der Lagegeber (5) in einer zweiten, von der ersten Umlaufbahn (U1) abweichenden Umlaufbahn (U2) umläuft, und mit einem der ersten und/oder der zweiten Umlaufbahn (U1, U2) zugeordneten Lagesensor (7) für den Lagegeber (5).

2. Einrichtung nach Anspruch 1, **dadurch gekennzeichnet**, daß der Lagegeber (5) ein Magnet und der Lagesensor (7) ein Magnetschalter ist.

3. Einrichtung nach Anspruch 1 oder 2, **dadurch gekennzeichnet**, daß die Drehachse (DR) des Rührflügels (3) parallel, vorzugsweise koaxial zur Mittelachse (M) des Vorratsbehälters (1) liegt.

4. Einrichtung nach einem der vorhergehenden Ansprüche, **dadurch gekennzeichnet**, daß die Lagerachse (LH) des Halters (4) an dem Rührflügel (3) parallel zu der Drehachse (DR) des Rührflügels (3) liegt.

5. Einrichtung nach einem der vorhergehenden Ansprüche, **dadurch gekennzeichnet**, daß die Auslenkeinrichtung (6) einen Steuernocken (8) für den Lagegeber (5) aufweist.

6. Einrichtung nach einem der vorhergehenden Ansprüche, **dadurch gekennzeichnet**, daß der Lagegeber (5) drehbeweglich an dem Halter (4) gelagert ist.

7. Einrichtung nach einem der vorhergehenden Ansprüche, **dadurch gekennzeichnet**, daß die Drehachse (DL) des Lagegebers (5) parallel zur Drehachse (DR) des Rührflügels (3) liegt.

8. Einrichtung nach einem der vorhergehenden Ansprüche, **dadurch gekennzeichnet**, daß der Halter (4) mit einer in der ersten Endlage des Halters (4) etwa radial zur Drehachse (DR) des Rührflügels (3) stehenden Widerstandsplatte (9) ausgestattet ist.

9. Einrichtung nach einem der vorhergehenden Ansprüche, **dadurch gekennzeichnet**, daß die beiden Endlagen des Halters (4) durch Anschläge (10, 11) an dem Rührflügel (3) bestimmt sind.

10. Einrichtung nach einem der vorhergehenden Ansprüche, **dadurch gekennzeichnet**, daß der Lagesensor (7), insbesondere Magnetschalter, in dem Stromkreis einer Signaleinrichtung, z.B. einer Signallampe, liegt.

## Claims

1. Device for the low level monitoring of a reservoir (1) comprising a supply feed pump (2) working along the piston principle, in particular a lubricant pump, characterized by a stirring wing (3) being rotatably actuatable by the supply feed pump (2) comprising an holder (4) being pivotable mounted thereto provided for a position indicator (5), which due to the flow resistance of the supply, in particular of the lubricant, is during the rotation of the stirring wing (3) pressed into a first end position, in which the position indicator (5) circulates on a first orbit (Ul), and comprising a deflecting device (6) transmitting the position indicator (5) during rotation from the first end position into a second end position, in which the position indicator (5) circulates in a second orbit (U2) diverging from the first orbit (Ul), and comprising a position sensor (7) associated with one of the first and/or the second orbit (Ul, U2) for the position indicator (5).

2. Device according to claim 1, characterized in that the position indicator (5) is a magnet and the position sensor (7) a magnet switch.

3. Device according to claim 1 or 2, characterized in that the axis of rotation (DR) of the stirring wing (3) is located parallel, preferably coaxially to the central axis (M) of the supply reservoir (1).

4. Device according to one of the preceding claims, characterized in that the bearing axis (LH) of the holder (4) is located at the stirring wing (3) parallel to the axis of rotation (DR) of the stirring wing (3).

5. Device according to one of the preceding claims, characterized in that the deflecting device (6) comprises a control cam (8) for the position indicator (5).

6. Device according to one of the preceding claims, characterized in that the position indicator (5) is rotatably supported to the holder (4).

7. Device according to one of the preceding claims, characterized in that the axis of rotation (DL) of the position indicator (5) is located parallel to the axis of rotation (DR) of stirring wing (3).

8. Device according to one of the preceding claims, characterized in that the holder (4) comprises a resistance plate (9) being positioned radially to the axis of rotation (DR) of the stirring wing (3) in the first end position.

9. Device according to one of the preceding claims, characterized in that the two end positions (4) are defined by stops (10, 11) at the stirring wing (3).

10. Device according to one of the preceding claims, characterized in that the position sensor (7), in particular the magnet switch, is located within the circuit of a signalling device, e.g. a signal lamp.

## Revendications

1. Dispositif de contrôle de niveau insuffisant d'un réservoir de stockage (1) avec une pompe d'alimentation de réserve (2) fonctionnant par ex. selon le principe du piston, en particulier une pompe à lubrifiant, caractérisé par une palette d'agitation (3) pouvant être commandée en rotation par la pompe d'alimentation de réserve (2) avec un support (4) articulé à celle-ci de façon pivotante pour un indicateur de position (5) qui, en raison de la résistance à l'écoulement du réservoir, en particulier du lubrifiant, lorsque la palette d'agitation (3) effectue son mouvement de rotation, est comprimé en une première position d'extrémité dans laquelle l'indicateur de position (5) circule sur une première trajectoire circulaire (U1), et avec un dispositif de déviation (6) qui déplace le support (4) avec l'indicateur de position (5) lors du mouvement de rotation, de la première position d'extrémité en une seconde position d'extrémité dans laquelle l'indicateur de position (5) circule sur une seconde trajectoire circulaire (U2) s'écartant de la première trajectoire circulaire (U1), et avec un détecteur de position (7) pour l'indicateur de position (5), associé à la première et/ou à la seconde trajectoire circulaire (U1, U2).

2. Dispositif selon la revendication 1, caractérisé en ce que l'indicateur de position (5) est un aimant et le détecteur de position (7) est un commutateur magnétique.

3. Dispositif selon la revendication 1 ou 2, caractérisé en ce que l'axe de rotation (DR) de la palette d'agitation (3) est situé parallèlement, de préférence coaxialement, à l'axe central (M) du réservoir de stockage (1).

4. Dispositif selon l'une quelconque des revendications précédentes, caractérisé en ce que l'axe de palier (LH) du support (4) sur la palette d'agitation (3) repose parallèlement à l'axe de rotation (DR) de la palette d'agitation (3).

5. Dispositif selon l'une quelconque des revendications précédentes, caractérisé en ce que le dispositif de déviation (6) comporte une came de commande (8) pour l'indicateur de position (5).

6. Dispositif selon l'une quelconque des revendications précédentes, caractérisé en ce que l'indicateur de position (5) est logé de façon pivotante sur le support (4).

7. Dispositif selon l'une quelconque des revendications précédentes, caractérisé en ce que l'axe de rotation (DL) de l'indicateur de position (5) est situé parallèlement à l'axe de rotation (DR) de la palette d'agitation (3).

8. Dispositif selon l'une quelconque des revendications précédentes, caractérisé en ce que le support (4) est équipé d'une plaque de résistance (9) qui, dans la première position d'extrémité du support (4), est orientée à peu près radialement à l'axe de rotation (DR) de la palette d'agitation (3).

9. Dispositif selon l'une quelconque des revendications précédentes, caractérisé en ce que les deux positions d'extrémité du support (4) sont déterminées par des butées (10, 11) sur la palette d'agitation (3).

10. Dispositif selon l'une quelconque des revendications précédentes, caractérisé en ce que le détecteur de position (7), en particulier le commutateur magnétique, est situé dans le circuit électrique d'un dispositif de signalisation, par ex. une lampe témoin.
